# EUROPÄISCHE PATENTSCHRIFT

(11) **EP 0 805 057 B1**
(45) Veröffentlichungstag und Bekanntmachung des Hinweises auf die Patenterteilung: **12.07.2000**
(21) Anmeldenummer: 97105728.6
(22) Anmeldetag: 07.04.1997
(51) Int. Cl.: B60J 7/12

(54) **Klapp- bzw. Faltverdeck für Fahrzeuge wie Cabriolets od.dgl.**
Foldable top for vehicles such as cabriolets or similar
Toit pliant pour véhicules comme cabriolets ou similaires

(30) Priorität: 29.04.1996 DE 19616891
(43) Veröffentlichungstag der Anmeldung: 05.11.1997
(73) Patentinhaber: PARAT-WERK SCHÖNENBACH GmbH + Co KG, D-42897 Remscheid (DE)
(72) Erfinder: Schanzer, Hubert, 94089 Neureichenau (DE); Blöchl, Armin, 94089 Neureichenau (DE)
(74) Vertreter: Patentanwälte Ostriga & Sonnet

(56) Entgegenhaltungen:
- US-A- 2 538 931
- US-A- 2 577 671
- US-A- 2 708 137

## Beschreibung

Die Erfindung bezieht sich auf ein Klapp- bzw. Faltverdeck für Fahrzeuge wie Cabriolets od. dgl. mit einem Außenbezug (Verdeckstoff) und einem Innenbezug (Himmel) sowie einem am Fahrzeug angelenkten Verdeckgestänge mit Spriegeln, an denen Außenbezug und Innenbezug befestigt sind, wozu an der zum Außenbezug weisenden Seite des Innenbezugs Rastorgane zum wiederlösbaren Queranrasten an die Spriegel angebracht sind und jedes Rastorgan wenigstens einen den Spriegelumfang zu mehr als 180° umgreifenden Clips umfaßt.

Ein derartiges Verdeck ist durch offenkundige Vorbenutzung seitens der Anmelderin bekanntgeworden. Die Befestigung des Verdeckstoffes einerseits und des Himmels andererseits vollzieht sich dabei wie folgt:

Auf die Innenseite des Verdeckstoffes wird in Richtung des Spriegelverlaufs ein schmales Klebeband aufgebracht, das als Positionier- und Fixierhilfe für ein einige Zentimeter breites Befestigungsband dient. Dieses Befestigungsband wird am Verdeckstoff angenäht und weist auf der von seiner Unterseite wegweisenden Fläche eine Klebstoffschicht auf. Nach der Positionierung am Spriegel wird dieses Klebeband um den Außenmantel des Spriegels gelegt und daran angeklebt. Auf diese Weise erhält man eine sehr solide Verdeckstoffbefestigung am Spriegel.

Der Innenbezug ist an seiner zum Außenbezug weisenden Seite mit Rastorganen zum wiederlösbaren Queranrasten an den Spriegel versehen. Diese Rastorgane bestehen jeweils aus einem sich in Längsrichtung des Spriegels erstreckenden, längsgeschlitzten Rohr aus Kunststoff. Dieses wird längs einer dem Schlitz gegenüberliegenden Mantellinie zunächst auf eine schmale Klebstoffspur aufgesetzt, die als Positionierhilfe auf die betreffende Fläche des Innenbezugstoffes aufgebracht ist, und anschließend mit dem Himmel vernäht. Ein derart mit einem 'Schlitzrohrclips' ausgerüsteter Himmel kann auf einfache Weise über den mit dem Verdeckstoff-Klebestreifen des Außenbezugs eingehüllten Spriegel aufgerastet werden.

Diese bekannte Konstruktion gestattet es, den Himmel von den Spriegeln abzuziehen, was beispielsweise dann zu erfolgen hat, wenn Reparaturmaßnahmen am Außenbezug vorgenommen werden müssen. Hingegen ist es sehr schwierig, den Außenbezug wieder vom Spriegel abzunehmen, denn dazu muß das den Spriegel jeweils umgreifende und mit ihm verklebte Klebeband eingeschnitten und mühsam entfernt werden.

Hier setzt die Erfindung ein. Ihr liegt in erster Linie die Aufgabe zugrunde, ein Klapp- bzw. Faltverdeck der im Oberbegriff des Anspruches 1 näher umrissenen Art anzugeben, welches mit Hilfe einfacher Maßnahmen ein unabhängiges Auswechseln von Himmel bzw. Verdeckstoff ermöglicht.

Ein Verdeck, das diese Aufgabe löst, ist im Anspruch 1 angegeben und insbesondere dadurch gekennzeichnet, daß auch an der zum Innenbezug weisenden Seite des Außenbezugs Rastorgane zum Queranstecken an die Spriegel angebracht sind, und daß jedes Rastorgan eine Mehrzahl von an einem gemeinsamen Rückgrat angebundenen sowie in Längsrichtung des Spriegels derart voneinander beabstandeten Clipsen umfaßt, daß jeweils ein Clips des einen Rastorgans zwischen zwei benachbarten Clipsen des anderen Rastorgans unmittelbar am Spriegel angreifen kann.

Zufolge dieser Maßnahmen ist es nunmehr auch ohne weiteres möglich, den Verdeckstoff mit seiner Spriegelbefestigung vom Spriegel abzuziehen, ohne daß zuvor der Himmel entfernt werden muß. Das Prinzip der Erfindung beruht darauf, daß die Rastorgane des Außenbezugs einerseits und die Rastorgane des Innenbezugs andererseits, also die in besonderer Weise ausgebildetenen Clipse, die zur Verfügung stehende Mantelfläche des Spriegels zu ihrer Aufrastbefestigung an den Spriegeln untereinander aufteilen. Dadurch, daß die Clipse des einen Rastorgans in die zwischen den Clipsen vorhandenen Lücken des anderen Rastorgans eingreifen, ergibt sich außerdem ein formschlüssiger Verbund zwischen den beiden Rastorganen mit der vorteilhaften Nebenwirkung, daß ein Längsverschieben der Rastorgane in Spriegelrichtung praktisch nicht möglich ist, da sich die Clipse gegenseitig daran hindern.

Überraschend wurde auch ein weiterer Vorteil festgestellt, der sich in einer verbesserten Haftung der Clips-Rastorgane am Spriegel äußert. Löste sich bei der vorbekannten Clipsrohranordnung des Innenbezugs das Schlitzrohr an einer Seite nur ein wenig vom Spriegel, wurde dadurch der Rohrspalt so sehr aufweitend beansprucht, daß er sich mehr und mehr weitete und sich fast von selbst völlig vom Spriegel lösen konnte. Aufgrund der erfindungsgemäßen Anordnung der voneinander beabstandeten Spriegelclipse bzw. gegenüber der ursprünglichen Version kürzeren, jedoch mehrfachen Schlitzrohrabschnitten kann es nun zwar auch vorkommen, daß beispielsweise am Rand eine Clipsanordnung vom Spriegel abgezogen wird. Dadurch wirken jedoch keine besonderen Kräfte auf die noch am Spriegel anhaftenden Clipsanordnungen. Es ist also auf diese Weise auch die Abzugsfestigkeit der Clipse erhöht worden.

Weitere vorteilhafte und zweckmäßige Ausgestaltungen sind Gegenstand der Unteransprüche. Sie ergeben sich auch aus der nachfolgenden Beschreibung der Erfindung anhand eines in den Zeichnungen dargestellten Ausführungsbeispiels. In den Zeichnungen zeigen:
- Fig. 1: eine schematische Ansicht eines mit einem Klapp- bzw. Faltverdeck ausgerüstetes Cabriolets,
- Fig. 2: eine schaubildliche Darstellung der Zuordnung eines Außenbezugs und eines Innenbezugs für ein Faltverdeck mit den dazwischen befindlichen beiderseitigen Rastorganen,
- Fig. 3: die beiden Rastorgane für den Außenbezug und für den Innenbezug in schaubildlicher Darstellung ihrer Zuordnung zueinander,
- Fig. 4: einen bereichsweisen Längsschnitt entsprechend der Schnittangabe IV-IV in Fig. 3, nun jedoch mit Außen- und Innenbezug,
- Fig. 5: einen Querschnitt entsprechend der Schnittangabe V-V in Fig. 4,
- Fig. 6: die beiden Rastorgane der Fig. 3 in bestimmungsgemäßer Position an einem nicht dargestellten Spriegel,
- Fig. 7: einen Längsschnitt entsprechend der Schnittangabe VII-VII in Fig. 6 mit den beiden Verdeckbezügen,
- Fig. 8: einen Querschnitt entsprechend der Schnittlinie VIII-VIII in Fig. 7,
- Fig. 9: eine der Fig. 3 entsprechende Darstellung einer abweichenden Rastorgan-Ausführung und
- Fig. 10: eine der Fig. 6 entsprechende Darstellung der Rastorgane aus Fig. 9.

Ein Cabriolet 10 ist gekennzeichnet durch ein Klapp- oder Faltverdeck 11. Das Verdeck 11 ist in einem hinteren Fahrzeugbereich 12 am Fahrzeugaufbau befestigt und um ein im einzelnen nicht dargestelltes Verdeckgestell durch Auf- und Zuklappen öffen- und schließbar angeordnet.

Um das Verdeck 11 in geschlossenem Zustand in Kontur zu halten, weist das Verdeckgestell eine Reihe von Spriegeln 13, 14 und einen hinteren Spannbügel 15 auf.

Mit Bezug zu der vorliegenden Erfindung sind der Windlaufspriegel 13 und der Spannbügel 15 nicht von Interesse, sondern die dazwischen liegenden konturgebenden Spriegel 14, die üblicherweise aus Stahl oder Aluminiumrohren bestehen.

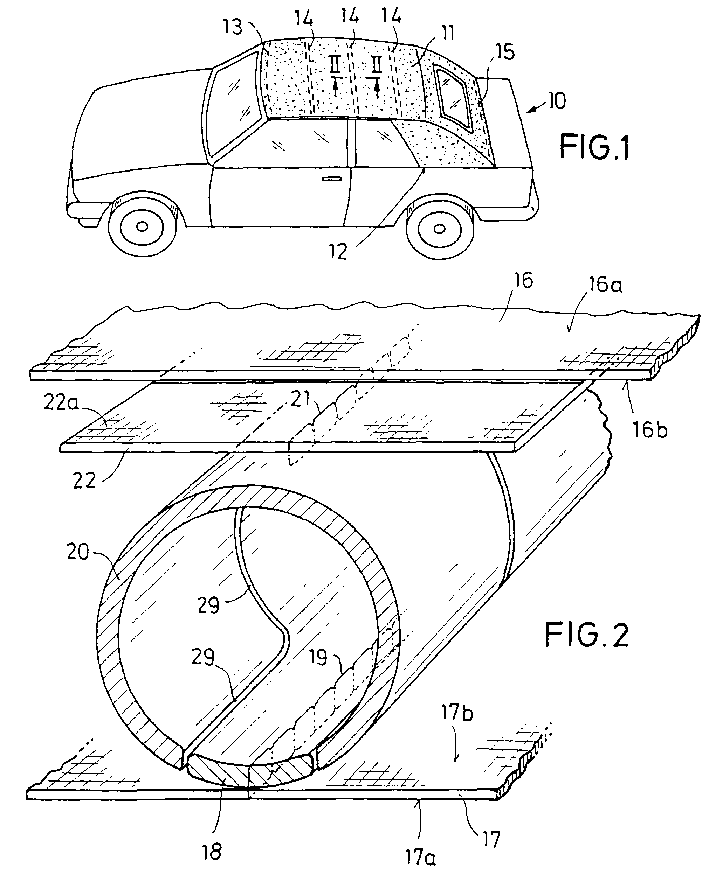

Fig. 2 zeigt einen Außenbezug 16 (den Verdeckstoff) und einen Innenbezug 17 (den Himmel) eines zweilagigen Verdecks. Die nach außen und im geschlossenen Verdeckzustand zum Himmel weisende Fläche des Verdeckstoffs 16 ist mit 16a bezeichnet, die zum Fahrgastraum weisende Fläche des Himmels mit 17a. In grundsätzlich an sich bekannter Weise ist an die zum Verdeckstoff 16 weisende Seite 17b des Innenbezugs 17 ein aus einem elastischen Kunststoffmaterial bestehendes Rastorgan 18 angenäht. Die Naht ist mit 19 bezeichnet; sie erstreckt sich in Längsrichtung eines Spriegels 14, also in Querrichtung des Verdecks 11. Die mit der Erfindung in Zusammenhang stehende Besonderheit in der Formgebung des Rastorgans 18, welches mit dem Innenbezug 17 verbunden ist, ergibt sich weiter unten.

Entsprechend der Erfindung ist auch dem Außenbezug 16 ein Rastorgan 20 zugeordnet. Dieses ist beim Ausführungsbeispiel mittels einer Naht 21 nicht unmittelbar mit dem Verdeckstoff 17 vernäht, sondern mit einem Streifen 22 aus einem flexiblen Material, welches dem Verdeckstoff ähnlich oder mit ihm identisch sein kann. Die zum Verdeckstoff 16 weisende Fläche 22a dieses Befestigungsstreifens 22 wird mit der Unterfläche 16b des Verdeckstoffes 16 verklebt, und zwar möglichst vollflächig. Der Vorteil dieser Anordnung besteht darin, daß auf der sichtbaren Außenseite des Verdeckstoffes 16 keine Nähte zu sehen sind.

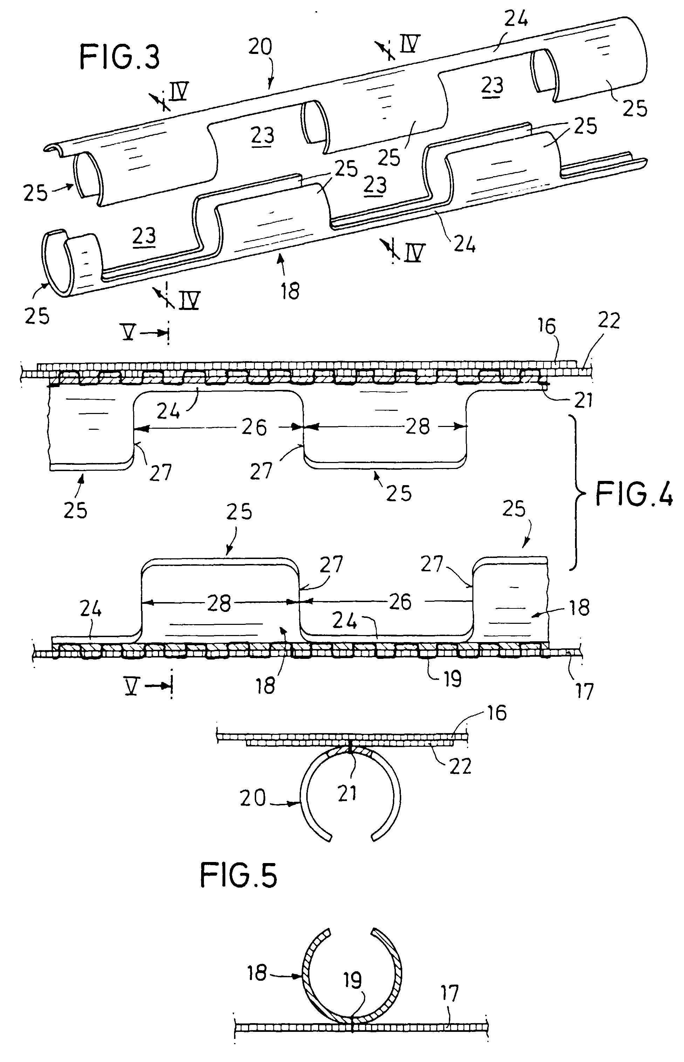

Die beiden Rastorgane 18 und 20 sind nach Art von elastisch auffederbaren Schlitzrohren gestaltet, jedoch nicht in der bisherigen Form mit einem von zwei parallelen Schlitzrändern begrenzten Schlitz. Die Form der beiden Befestigungsorgane entsprechend einer ersten Ausführungsform ergibt sich aus Fig. 3.

Danach besteht jedes der beiden Rastorgane 18 und 20, die untereinander identisch sein können, gewissermaßen aus einem axiale Mantelausnehmungen 23 aufweisenden Schlitzrohr. Diese Anordnung führt zu einer Bauform eines Befestigungsorgans 20 bzw. 18 dergestalt, daß es ein schmales Rohr-Reststück, das Rückgrat 24, welches sich in Längsrichtung über die jeweils gesamte Anordnung hinwegerstreckt, und relativ kurze Clipse 25 umfaßt. Diese Clipse 25 weisen, wie es typisch ist für rohrschellenförmige Clipse, zusammen mit dem gewölbten Rückgrat 24 eine Form auf, die ein Spriegelrohr zu mehr als 180° umschließt.

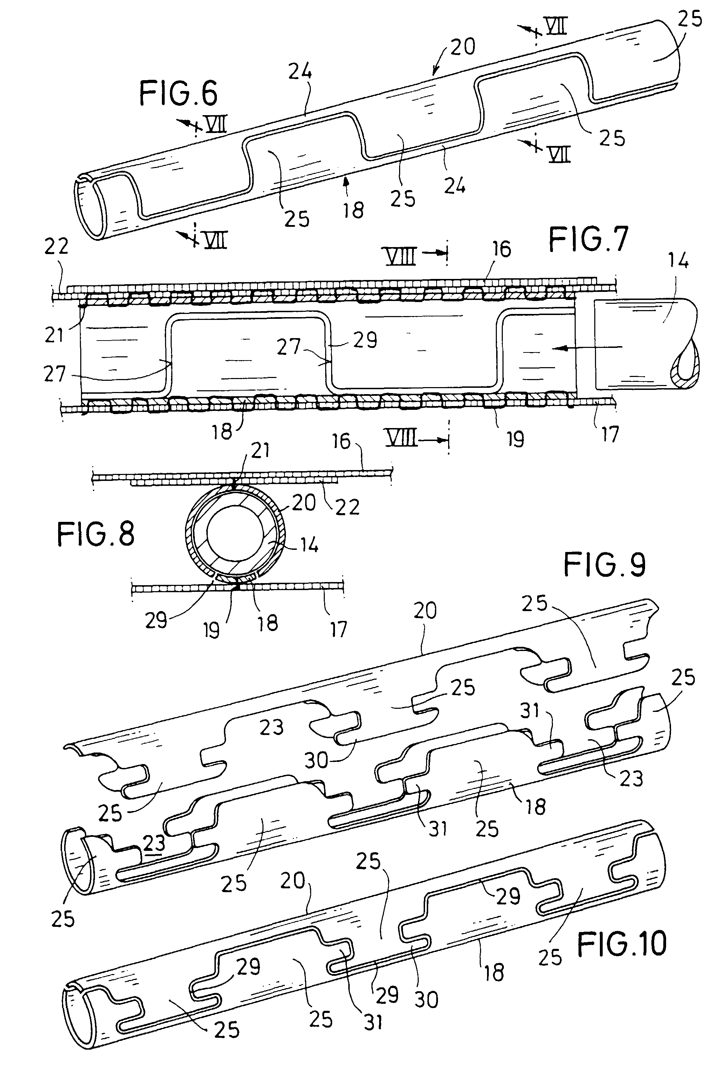

Im übrigen ist die Anordnung so getroffen, daß die Weite der Schlitze 22, also der Abstand 26 zweier Clipsbegrenzungskanten 27 voneinander, im wesentlichen der Breite 28 eines Clipses 25 entspricht. Diese Anordnung ist wechselseitig gleich, so daß die auf einem gemeinsamen Spriegel 14 angerasteten Rastorgane 18 und 20 sich nahezu die gesamte Spriegelmantelfläche teilen können und an jeder Stelle nur einen schmalen Spalt 29 zwischen sich belassen, der, wie dies die Fig. 6 und 7 gut veranschaulichen, bei diesem Ausführungsbeispiel im wesentlichen mäanderförmig verläuft.

Es ist nun ohne weiteres erkennbar, daß sich die Befestigungsorgane am Verdeckstoff 16 und am Himmel 17 an gegenüberliegenden Seiten eines Spriegels 14 quer an diesen anrasten und unabhängig voneinander auch wieder abziehen lassen.

Die Ausführungsform der Befestigungsorgane 18 und 20, wie sie in den Fig. 9 und 10 dargestellt ist, unterscheidet sich von der zuvor beschriebenen durch eine vom dortigen mäanderförmigen Verlauf der Fuge 29 abweichende Gestaltung der Clipsrandkanten 27. Nunmehr sind die Clipsrandkanten 27 nicht mehr jeweils in einer Querebene gelegen, sondern sie weisen einen gewundeneren Randverlauf aus, insbesondere unter Bildung eines Hammerkopfes 30 bzw. hammerkopfähnlicher Fortsätze 31. Hierdurch entsteht nach dem Anrasten beider Befestigungsorgane 18 und 20 an denselben Spriegel ein entgegen der Wiederabzugsrichtung formschlüssiger Ineinandergriff der Clipsränder, wie Fig. 10 dies sehr gut veranschaulicht. Nun ist es ohne Zuhilfenahme eines Demontagewerkzeugs, das im einfachsten Fall ein Schraubendreher sein kann, nicht mehr ohne weiteres möglich, die Clips-Befestigungsorgane 18 und 20 von einem Spriegel 14 abzuziehen. Dies ist durchaus erwünscht, da Manipulationen und Reparaturarbeiten am Verdeckstoff und/oder am Himmel von geschultem Fachpersonal vorgenommen werden sollten.

Die Rastorgane 18 und 20 werden durch spanabhebende Formgebung, insbesondere Schneiden, eines extrudierten Endlos-Kunststoffrohres bzw. -Schlitzrohres erzeugt. Als Material kommt daher bevorzugt ein thermoplastischer Kunststoff zur Anwendung, der insbesondere die gewünschten Federeigenschaften aufweisen muß, die einerseits einen festen Halt der Clipse 25 am Spriegel 14 gewährleisten, andererseits aber auch - aufgrund ihrer Elastizität - ein problemloses Abziehen vom Spriegel gestatten.

## Patentansprüche

1. Klapp- bzw. Faltverdeck für Fahrzeuge wie Cabriolets od. dgl. mit einem Außenbezug (16) und einem Innenbezug (17) sowie einem am Fahrzeug (10) angelenkten Verdeckgestänge mit Spriegeln (14), an denen Außenbezug (16) und Innenbezug (17) befestigt sind, wozu an der zum Außenbezug (16) weisenden Seite (17b) des Innenbezugs (17) Rastorgane (18) zum wiederlösbaren Queranrasten an die Spriegel (14) angebracht sind und jedes Rastorgan (18) wenigstens einen den Spriegelumfang zu mehr als 180° umgreifenden Clips (25) umfaßt, dadurch gekennzeichnet, daß auch an der zum Innenbezug (17) weisenden Seite (16b) des Außenbezugs (16) Rastorgane (20) zum Queranstecken an die Spriegel (14) angebracht sind, und daß jedes Rastorgan (18, 20) eine Mehrzahl von an einem gemeinsamen Rückgrat (24) angebundenen sowie in Längsrichtung des Spriegels (14) derart voneinander beabstandeten Clipsen (25) umfaßt, daß jeweils ein Clips (25) des einen Rastorgans (z.B. 18) zwischen zwei benachbarten Clipsen (25) des anderen Rastorgans (z.B. 20) unmittelbar am Spriegel (14) angreifen kann.

2. Verdeck nach Anspruch 1, gekennzeichnet durch einen im wesentlichen mäanderförmigen Verlauf der die Clipse (25) und die Zwischenräume (23) zwischen ihnen definierenden Kanten (27) des Rastorgans (25).

3. Verdeck nach Anspruch 1 oder 2, dadurch gekennzeichnet, daß die Abstände (26) zwischen zwei Clipsen (25) des einen Rastorgans (18) im wesentlichen der Breite (28) eines Clipses (25) des anderen Rastorgans (20) entsprechen, die Clipse (25) des einen Rastorgans (20) die Lücken (23) zwischen den Clipsen (25) des jeweils anderen Rastorgans (18) also im wesentlichen ausfüllen.

4. Verdeck nach einem oder mehreren der Ansprüche 1 bis 3, dadurch gekennzeichnet, daß das dem Außenbezug (16) zugeordnete Rastorgan (20) mit dem Innenbezug (17) zugeordneten Rastorgan (18) identisch ist.

5. Verdeck nach einem oder mehreren der Ansprüche 1 bis 4, dadurch gekennzeichnet, daß die Clipsbegrenzungskanten (27) im wesentlichen geradlinig sowie in Querschnittsebenen des Spriegels (14) verlaufen.

6. Verdeck nach einem oder mehreren der Ansprüche 1 bis 4, gekennzeichnet durch formschlüssigen Eingriff von Clipsen (25) des einen (18) und Clipsaufnahmen (23) des anderen Rastorgans (20) entgegen der Querabzugsrichtung der Rastorgane (18, 20) vom Spriegel (14).

7. Verdeck nach Anspruch 5 oder 6, dadurch gekennzeichnet, daß die Clipsbegrenzungskanten (27) zumindest bereichsweise in Richtung oder schräg zur Richtung der Spriegellängsachse verlaufen und hinterschnittene Bereiche zum gegenseitigen formschlüssigen Eingriff ausbilden.

8. Verdeck nach Anspruch 6, dadurch gekennzeichnet, daß das dem Außenbezug (16) zugeordnete Rastorgan (20) an einem Stoffstreifen (22) angenäht ist, der flächig mit der Innenfläche (16b) des Außenbezugs (16) verklebt ist.

## Claims

1. A collapsible or folding hood for vehicles such as cabriolets or the like with an outer cover (16) and an inner cover (17) as well as a hood rod system articulated to the vehicle (10) and comprising supports (14), to which the outer cover (16) and inner cover (17) are secured, to which end locking elements (18) are fitted on the side (17b) of the inner cover (17) facing the outer cover (16) for releasable transverse locking onto the supports (14), and each locking element (18) comprises at least one clip (25) engaging around the support circumference by more than 180°, characterised in that locking elements (20) are also fitted on the side (16b) of the outer cover (16) facing the inner cover (17) for transverse fitting onto the supports (14), and each locking element (18, 20) comprises a plurality of clips (25), which are connected to a common spine (24) and are spaced apart in the longitudinal direction of the support (14) in such a manner that one clip (25) of one locking element (e.g. 18) can engage directly on the support (14) between two adjacent clips (25) of the other locking element (e.g. 20) in each case.

2. A hood according to claim 1, characterised by a substantially meander-like path of the edges (27) of the locking element (18, 20) defining the clips (25) and the intermediate spaces (23) between the clips (25).

3. A hood according to claim 1 or 2, characterised in that the distances (26) between two clips (25) of one locking element (18) corresponds substantially to the width (28) of a clip (25) of the other locking element (20), so that the clips (25) of one locking element (20) substantially fill the gaps (23) between the clips (25) of the respective other locking element (18).

4. A hood according to one or more of claims 1 to 3, characterised in that the locking element (20) associated with the outer cover (16) is identical to the locking element (18) associated with the inner cover (17).

5. A hood according to one or more of claims 1 to 4, characterised in that the clip defining edges (27) extend substantially linearly and in cross sectional planes of the support (14).

6. A hood according to one or more of claims 1 to 4, characterised by positive-locking engagement of clips (25) of one locking element (18) and clip recesses (23) of the other locking element (20) in the opposite direction to the direction of transverse removal of the locking elements (18, 20) from the support (14).

7. A hood according to claim 5 or 6, characterised in that the clip defining edges (27) extend at least in sections in the direction of, or inclined to the direction of the support longitudinal axis and form undercut regions for reciprocal positive-locking engagement.

8. A hood according to claim 6, characterised in that the locking element (20) associated with the outer cover (16) is sewn onto a material strip (22), which is bonded over its surface area to the inner surface (16b) of the outer cover (16).

## Revendications

1. Capote escamotable ou pliante, pour véhicules tels que cabriolets ou similaires avec un revêtement extérieur (16) et un revêtement intérieur (17), ainsi qu'un système d'arceaux, articulé au véhicule (10), comportant des arceaux (14), auxquels sont fixés le revêtement extérieur (16) et le revêtement intérieur (17), ce pourquoi sur la face (17b) du revêtement intérieur (17), tournée vers le revêtement extérieur (16), sont montés des organes d'encliquetage (18) pour obtenir un montage par encliquetage transversal, redésolidarisable, sur les arceaux (14), et chaque organe d'encliquetage (18) comprenant au moins un clip (25) entourant sur plus de 180 degrés la périphérie de l'arceau, caractérisé par le fait que, également sur la face (16b) du revêtement extérieur (16), tournée vers le revêtement intérieur (17), sont montés des organes d'encliquetage (20) destinés à un montage par enfichage transversal sur les arceaux (14), et par le fait que chaque organe d'encliquetage (18, 20) comprend une pluralité de clips (25) liés à une épine dorsale (24) commune, ainsi qu'espacés les uns des autres dans la direction longitudinale des arceaux (14), de manière que chaque fois un clip (25) d'un organe d'encliquetage, par exemple (18), puisse agir directement sur l'arceau (14), entre deux clips (25) voisins de l'autre organe d'encliquetage (par exemple 20).

2. Capote selon la revendication 1, caractérisé par une allure sensiblement en forme de méandre des arêtes (27), définissant les clips (25) et les espaces intermédiaires (23) entre eux, de l'organe d'encliquetage (18).

3. Capote selon la revendication 1 ou 2, caractérisé par le fait que les espacements (26) entre deux clips (25) d'un organe d'encliquetage (18) correspondent essentiellement à la largeur (28) d'un clip (25) de l'autre organe d'encliquetage (20), les clips (25) d'un organe d'encliquetage (20) comblant donc pratiquement totalement les vides (23) existant entre les clips (25) chaque fois de l'autre organe d'encliquetage (18).

4. Capote selon l'une ou plusieurs des revendications 1 à 3, caractérisée en ce que l'organe d'encliquetage (20) associé au revêtement extérieur (16) est identique à l'organe d'encliquetage (18) associé au revêtement intérieur (17).

5. Capote selon l'une ou plusieurs des revendications 1 à 4, caractérisée en ce que les arêtes de délimitation de clip (27) ont une allure sensiblement rectiligne, également dans les plans de section transversale de l'arceau (14).

6. Capote selon l'une ou plusieurs des revendications 1 à 4, caractérisée par un engagement, avec liaison par ajustement de forme, des clips (25) d'un organe d'encliquetage (18) et de logements de clip (23) de l'autre organe d'encliquetage (20), à l'encontre du sens d'extraction transversal des organes d'encliquetage (18, 20) par rapport à l'arceau (14).

7. Capote selon la revendication 5 ou 6, caractérisée par le fait que les arêtes de délimitation de clips (27) s'étendent, au moins par zones, dans la direction ou obliquement par rapport à la direction de l'axe longitudinal des arceaux et constituent des zones dotées d'une contre-dépouille, pour assurer un engagement mutuel, avec liaison par ajustement de forme.

8. Capote selon la revendication 6, caractérisé par le fait que l'organe d'encliquetage (20) associé au revêtement extérieur (16) est monté par couture, sur une bande de tissu (22) qui est collée en surface à la surface intérieure (16b) du revêtement extérieur (16).
